(19) Europäisches Patentamt

European Patent Office

Office européen des brevets

(11) Veröffentlichungsnummer: **0 407 676 B1**

(12) **EUROPÄISCHE PATENTSCHRIFT**

(45) Veröffentlichungstag der Patentschrift: **27.04.94**

(21) Anmeldenummer: **89710061.6**

(22) Anmeldetag: **14.07.89**

(51) Int. Cl.5: **G01F 1/66**, G01N 29/02

(54) **Verfahren zur Messung eines zeitlichen Versatzes einander zugeordneter Ultraschallsignale und zugehöriger Messanordnungen.**

(43) Veröffentlichungstag der Anmeldung:
**16.01.91 Patentblatt 91/03**

(45) Bekanntmachung des Hinweises auf die Patenterteilung:
**27.04.94 Patentblatt 94/17**

(84) Benannte Vertragsstaaten:
**AT BE CH DE ES FR GB GR IT LI LU NL SE**

(56) Entgegenhaltungen:
**EP-A- 0 051 293**
**DE-A- 2 309 606**
**DE-A- 2 651 142**
**GB-A- 2 022 255**
**NL-A- 7 713 357**

**PATENT ABSTRACTS OF JAPAN, Band 7, nr. 231 (P-229)[1376], 13. Oktober 1983; & JP-A-58 120 119**

(73) Patentinhaber: **HAIGES ELEKTRONIK GMBH**
**Karlstrasse 39**
**D-74336 Brackenheim(DE)**

(72) Erfinder: **Reime, Gerd**
**Kelterstrasse 39**
**D-7131 Wurmberg(DE)**

## Beschreibung

Die Erfindung bezieht sich auf ein Verfahren zur Messung des zeitlichen Versatzes zweier am Ende ihrer Übertragungsstrecke empfangener einander zugeordneter Ultraschallsignale am Ende der Übertragungsstrecken gemäß dem Oberbegriff des Anspruches 1 und betrifft darüber hinaus Anordnungen zur Durchführung des Verfahrens.

Die Werte bestimmter Parameter, Eigenschaften oder Zustände eines gasförmigen, flüssigen oder festen Mediums werden häufig mit Ultraschallsignalen gemessen, die in der Gestalt von begrenzten Schwingungspakteten mehrfach wiederholt in dieses Medium abgestrahlt werden. Die Parameter des von dem Medium übertragenen Ultraschallsignales, insbesondere dessen Ausbreitungsgeschwindigkeit, werden von den augenblicklich bestehenden Parametern des Mediums so beeinflußt, daß aus den dadurch aufgetretenen Änderungen der Parameter der übertragenen Ultraschallsignale augenblicklich bestehende Werte von Parametern des Übertragungsmediums bestimmt werden können.

Aus der deutschen Patentschrift 2651142 ist beispielsweise eine Anordnung zur Messung der Strömungsgeschwindigkeit eines flüssigen Mediums bekannt, die in einem von dem Medium durchflossenem Messrohr eine schräg zur Strömungsrichtung verlaufende Ultraschallübertragungsstrecke enthält. In dieser Übertragungsstrecke werden abwechselnd in beide Übertragungsrichtungen Ultrallschallsignale in der Gestalt eines aus mehreren Schwingungen hoher Schwingungsfrequenz bestehenden Schwingungspaketes abgestrahlt. Aus der Wiederholfrequenz der abwechselnd an den beiden Enden der Ultraschallübertragungsstrecke empfangenen Ultraschallsignale wird je ein Schwingungssignal gebildet. Im Ruhezustand des Mediums ist deren Phasenunterschied 180°. Aus den Phasenabweichungen hiervon kann die Richtung und die Höhe der Strömungsgeschwindigkeit des die Ultraschallsignale übertragenden Mediums in einer Auswertschaltung bestimmt werden. Die Messung des Phasenversatzes erfolgt durch eine Auszählung mit Zählimpulsen zwischen jeweils zwei zeitlich benachbarten Nulldurchgängen. Hierbei ist die Frequenz der Zählimpulse gleich der Frequenz der Übertragungsschwingungen der Ultraschallsignale. Sie liegt im Bereich der Dickenschwingungsresonanz der elektroakustischen Wandler der Ultraschallübertragungsstrecke und ist mehr als drei Zehnerpotenzen größer als die Frequenz der beiden nach den elektroakustischen Wandlern gebildeten Schwingungssignale. Außerdem ist es mit der bekannten Meßanordnung auch möglich, mit dem gemessenen Phasenversatz und den gemessenen Laufzeiten der Ultraschallsignale die Dichte des Übertragungsmediums zu bestimmem.

Die Meßschaltung der bekannten Anordnung erfordert jedoch einen hohen Aufwand an hochselektiven Quarzfiltern, teilweise für relativ niedere Filterfrequenzen. Diese erzeugen zwar relativ störungsfreie Schwingungssignale für die Phasenversatzmessung, haben jedoch keinen Einfluß auf die Genauigkeit der Bildung des Phasenversatzes aus den an den Empfangsorten ankommenden Schwingungspaketen der Ultraschallschwingungen. Außerdem kann mit dem Messverfahren durch Phasenvergleich nur ein beschränkter Bereich des Wertes eines bestimmten Parameters eines Mediums erfaßt werden, der weniger als einem Phasenversatz von ± 180° entspricht.

Aus der europäischen Anmeldeschrift EP - A - 051293 ist eine Messanordnung zur Messung der Fließgeschwindigkeit der Atemluft von Patienten bekannt. Die bekannte Messanordnung enthält in einem Messrohr zum Durchfluß der Atemluft eine schräg zur Flussrichtung der Atemluft angeordnete Meßstrecke für Ultraschallsignale. Diese Ultraschallübertragungsstrecke ist an ihren Enden je durch einen Ultraschallwandler abgeschlossen. Zur Messung des Flusses der Atemluft wird wiederholt von jedem Ultraschallwandler gleichzeitig ein aus einem Schwingungspaket bestehendes Ultraschallsignal an den gegenüberliegenden Schallwandler ausgesendet und von diesem empfangen und in ein elektrisches Signal umgesetzt. Mit dem Beginn des Aussendens wird ein Zeitzähler gesetzt, der bis zum Empfang des ersten Ultraschallsignales einen 10-MHz - Zeittakt zählt. Mit dem Empfang des ersten Ultraschallsignales wird außerdem ein Zeitdifferenzzähler gesetzt, der bis zum Empfang des zweiten der beiden einander zugeordneten Ultraschallsignale einen 100 MHz - Zeittakt zählt. Aus den gezählten Zeitwerten wird in einer Rechenanordnung der bekannten Messanordnung die Strömungsgeschwindigkeit der Atemluft berechnet.

Der Erfindung liegt die Aufgabe zu Grunde, mit verhältnismäßig geringem Aufwand in einem weiten Bereich den zeitlichen Versatz jeweils zweier einander zugeordneter, an bestimmten Empfangsorten empfangener Ultraschallsignale mit einer hohen Genauigkeit zu messen. Diese Aufgabe wird nach der Erfindung durch die im kennzeichnenden Teil des Anspruches 1 angegebenen Merkmale gelöst. Die Unteransprüche kennzeichnen vorteilhafte Ausgestaltungen und Weiterbildungen der dargestellten Erfindung.

Gegenüber der Messung des Phasenversatzes bringt das Messverfahren nach der Erfindung den Vorteil, daß die Messung des zeitlichen Versatzes der zu vergleichenden Ultraschallsignale, die für die Messung eines Parameter des die Ultraschallsignale übertragenden Mediums erforderlich ist, unmittelbar erfolgt, sodaß die beim Messen eines Phasenversatzes auftretenden Meßunsicherheiten umgangen werden. Durch die Übertragung einer Zeitstrecke für eine bestimmte Bezugszeit wird darüber hinaus die Messung einer Versatzzeit oder eines Zeitabstandes empfangener, einander zugeordneter Ultraschallsignale unabhängig von den Störungen, die auf den Übertragungsstrecken auftreten, beispielsweise von Störungen durch Kompressionsschwingungen auf der Übertragungsstrecke, da dem gemessenen, eine bestimmte Bezugszeit darstellenden Zeitabstand der tatsächliche Wert dieser Bezugszeit zusätzlich zugeordnet wird.

Die eine bestimmte Bezugszeit darstellende Zeitstrecke kann beispielsweise durch Auszählen einer bestimmten Anzahl aufeinander folgender Schwingungen des empfangenen Schwingungspaktes eines übertragenen Ultraschallsignales oder durch messen des Zeitabstandes zweier empfangener, nacheinander in einem eine bestimmte Bezugszeit darstellenden Zeitabstand abgestrahlter Schwingungspakete eines Ultraschallsignals gewonnen werden.

Ferner ermöglicht eine nach der Erfindung durchgeführte Messung eines Zeitabstandes empfangener Schwingungspakete eine wesentliche Einschränkung oder gänzliche Beseitigung einer Meßunsicherheit durch den sogenannten Apertur-Jitter. Dieser tritt bei der Auszählung eines Zeitabstandes durch die Impulse eines freilaufenden Impulsgenerators dadurch auf, daß die Impulsschwingungen nicht auf den Beginn des auszuzählenden Zeitabschnittes synchronisiert werden kann. Dadurch tritt ein statistischer Zählfehler auf, der bei kurzen Zählimpulsen bis nahezu zwei nicht erfaßte Zählimpulsperioden erreichen kann. Das ergibt bei kleinen zu messenden Zeitabschnitten, für die nur wenige Zählimpulse zum Auszählen erforderlich sind, eine große Meßunsicherheit. Werden zum Auszählen die Schwingungen eines empfangenen Schwingungspaketes verwendet, geht diese Meßunsicherheit bis um die Hälfte zurück. Wird dagegen nach einer Ausbildung der Erfindung der Analogwert der in elektrische Signale umgesetzten Zeitabstände empfangener Ultraschallsignale mit dem Analogwert ebenfalls in elektrische Signale umgesetzter, eine bestimmte Bezugszeit darstellender übertragener Zeitwerte ins Verhältnis gesetzt und aus diesem Verhältniswert ein mit dem tatsächlichen Bezugswert oder einem dementsprechenden elektrischen Wert multiplizierter Wert des zu messenden Zeitversatzes gebildet, unterliegt dieser so gemessene Zeitwert nicht mehr einem Apertur-Jitter.

Ein dem Apertur-Jitter entsprechender Effekt kann jedoch auch dadurch auftreten, daß die empfangenen Ultraschallsignale zeitlich nicht genau detektiert werden, d.h., daß sie beispielsweise an unterschiedlichen Schwingungen ihrer Schwingungspakete erkannt werden. Um dies zu verhindern und um damit eine genaue Messung der Zeitabstände zu gewährleisten, wird nach einer weiteren Ausbildung der Erfindung in besonders vorteilhafter Weise eine bestimmte Schwingung im Einschwingungsbereich der Schwingungspakete der Ultraschallsignale durch eine besonders günstig eingestellte Meßpegelschwelle detektiert und durch eine Schaltflanke markiert. Die wird zusätzlich durch einen Regelvorgang erreicht, durch den alle Störungen des Ultraschallsignales, die dieser auf seiner Übertragungsstrecke erlitten hat, ausgeregelt werden.

Ein weiterer Vorteil der Erfindung besteht darin, daß mit der Wahl der übertragenen Bezugszeit ein bestimmter Umfang des Zeitbereiches für die Messung des Zeitabstandes zweier empfangener, einander zugeordneter Ultraschallsignale eingestellt werden kann, in dem die Zeitwerte dieser Zeitabstände mit einer großen Auflösung und damit mit einer besonders großen Meßsicherheit angezeigt werden können. Mit den Maßnahmen nach der Erfindung ist es ohne wesentlich zusätzlichen Aufwand möglich, durch individuelles oder selbsttätiges verändern der Bezugszeit und der zugehörigen zu übertragenden Zeitstrecke den für die Messung günstigsten Meßbereich einzustellen.

Die Erfindung wird nachfolgend an Hand vorteilhafter Ausführungsbeispiele näher erläutert. In den zugehörigen Zeichnungen zeigen

Fig. 1 ein Blockschaltbild einer Anordnung zur Messung der Strömungsgeschwindigkeit und der Dichte eines durch ein Meßrohr strömenden Mediums mittels Ultraschallsignalen,

Fig. 2 Diagramme a) bis i) zur Darstellung des Meßablaufes für eine Messung durch das erste Meßteil Der in Fig. 1 dargestellten Meßanordnung,

Fig. 3 ein elektrisches Schwingungspaket nach dem Empfang eines übertragenen Ultraschallsignals,

Fig. 4 ein Blockschaltbild eines Ausführungsbeispiels eines Signaldetektors und

Fig. 5 Diagramme a) bis f) zur Darstellung des Meßablaufes für eine Messung durch das zweite Meßteil der in Fig. 1 dargestellten Meßanordnung.

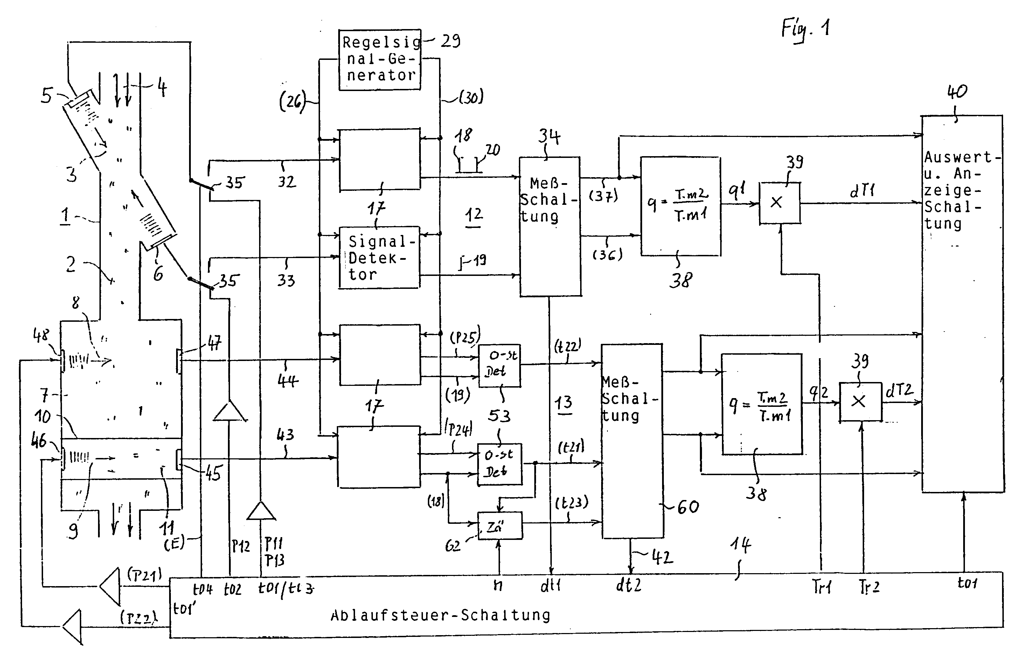

In Fig. 1 ist ein Blockschaltbild einer Anordnung zum Messen der Strömungsgeschwindigkeit und der Dichte eines strömenden Mediums dargestellt. Dazu enthält die Meßanordnung ein Meßrohr 1, das im wesentlichen von dem strömenden Medium 2 durchströmt und ausgefüllt wird. Im Strömungsbereich des Meßrohres befindet sich eine erste Ultraschallübertragungsstrecke 3, die schräg zur Strömungsrichtung 4 so angeordnet ist, daß die Strömungsrichtung eine wesentliche Komponente der Ultraschallübertragungsstrecke bildet. Die Übertragungsstrecke 3 wird von 2 elektroakustischen Wandlern 5 und 6 begrenzt, die sowohl als Ultraschallsender als auch als Ultraschallempfänger verwendet werden. Ein weiterer Raum 7 des Meßrohres 1 enthält eine zweite Ultraschallübertragungsstrecke 8, die senkrecht zur Strömungsrichtung 4 angeordnet ist, und eine in einem allseitig geschlossenen Referenzrohr 10 angeordnete Ultraschallübertragungsstrecke 9. Dieses Referenzrohr 10 ist von dem strömenden Medium 2 umspült und mit einem Referenzmedium 11 bekannter Eigenschaften gefüllt. Die in Fig. 1 dargestellte Meßanordnung enthält außerdem einen ersten Meßteil 12, der zur Messung der Strömungsgeschwindigkeit des durch die erste Ultraschallübertragungsstrecke 3 strömenden Mediums 2 vorgesehen ist, sowie einen zweiten Meßteil 13, der an die im erweiterten Raum 7 des Meßrohres 1 befindlichen Ultraschallübertragungsstrecken 8 und 9 angeschlossen ist und zur Messung der Dichte des diesen Raum 7 durchströmenden Mediums vorgesehen ist, und eine Ablaufsteuerschaltung 14, die die Einspeisung der Ultraschallsignale in die Ultraschallübertragungsstrecken und den Ablauf der Meßvorgänge steuert.

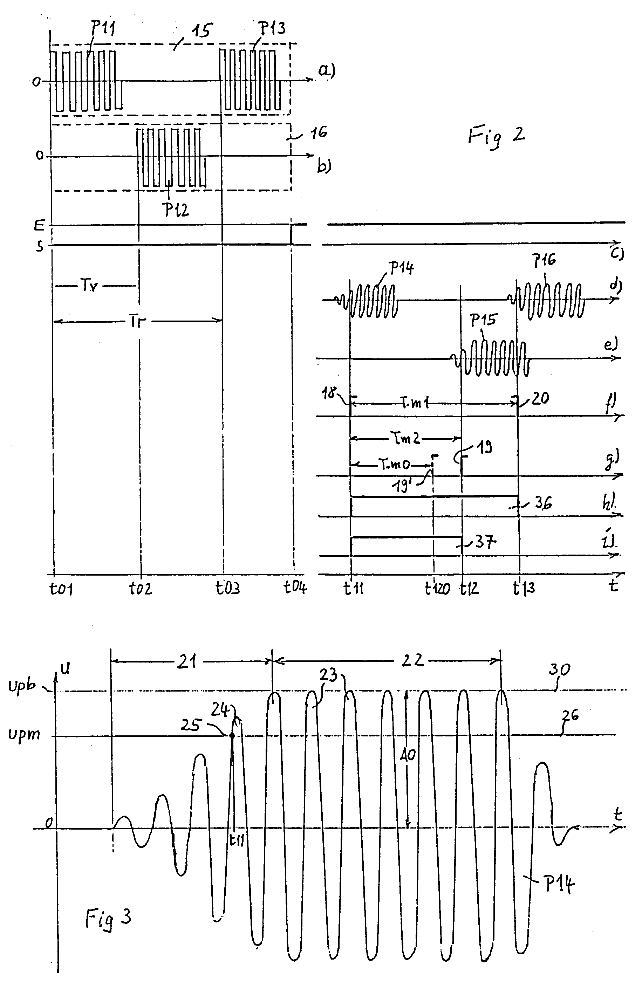

Zunächst wird ein Ablauf eines Meßvorganges mit dem ersten Meßteil 12 dargestellt. Die Ablaufsteuerschaltung 14 erzeugt nacheinander drei Schwingungspakete P11, P12 und P13, die zu den Zeitpunkten t01, t02 und t03 beginnen, wie in den Diagrammen a) und b) der Fig. 2 dargestellt ist, und von denen das erste und das letzte Schwingungspaket dem einen akustischen Wandler 5 der Ultraschallübertragungsstrecke 3 zur Abstrahlung eines ersten Ultraschallsignales 5 in das Übertragungsmedium 2 und das mittlere Schwingungspaket P12 dem am anderen Ende der Ultraschallübertragungsstrecke 3 angeordneten elektroakustischen Wandler 6 zur Abstrahlung eines zweiten Ultraschallsignales 16 in das strömende Medium 2 zugeführt wird. Die Schwingungsfrequenz der Schwingungen der Schwingungspakete liegt etwa im Bereich der Dickenschwingungsresonanz der Ultraschallwandler, um für die Messung günstige Abstrahlung und Ausbreitungsbedingungen zu erhalten. Das letzte Schwingungspaket P13 ist vom ersten Schwingungspaket P11 um eine bestimmte, einen Bezugswert darstellende Bezugszeit Tr versetzt. Ferner ist das zweite Schwingungspaket P12 gegenüber dem ersten Schwingungspaket P11 um eine bestimmte Versatzzeit Tv versetzt, die im dargestellten Ausführungsbeispiel gleich der halben Bezugszeit Tr ist. Unmittelbar nach der Abstrahlung der Ultraschallsignale 15 und 16 werden die elektroakustischen Wandler 5 und 6, die bis zum Zeitpunkt t04 als Ultraschallsender arbeiten, zu diesem Zeitpunkt t04 mittels zweier Umschalter 35 in den Empfangsbetrieb umgeschaltet, wie im Diagramm c) in Fig. 2 dargestellt ist, d.h. als Ultraschallempfänger an den Eingang des ersten Meßteiles 12 der Meßanordnung angeschlossen. Auf der ersten Ultraschallübertragungsstrecke werden die Ultraschallsignale 15 und 16 durch das strömende Medium 2, in dem sie übertragen werden, verzögert oder beschleunigt, je nach dem in welcher Richtung sie die Übertragungsstrecke 3 durchlaufen. Dadurch entsteht ein zusätzlicher Zeitversatz zwischen den beiden Ultraschallsignalen 15 und 16, die am Ende der Übertragungsstrecke 3 von den elektroakustischen Wandlern 5 und 6 empfangen und in elektrische Signale umgewandelt werden, deren elektrische Schwingungspakete P14, P15 und P16 in den Diagrammen d) und e) der Fig. 2 chematisch dargestellt sind. Die elektrischen Signale werden in jedem der beiden Meßkanäle 32 und 33 des ersten Meßteils 12 je einem Signaldetektor 17 zugeführt. Die Signaldetektoren 17 erkennen den Empfangszeitpunkt t11, t12, t13, der ihnen zugeführten elektrischen Schwingungspakete P14, P15, P16 und zeigen diese Empfangszeitpunkte durch eine Schaltflanke 18, 19, 20 an, die getrennt für die beiden Meßkanäle 32 und 33 der Meßanordnung in den Diagrammen f) und g) der Fig. 2 dargestellt sind.

Insbesondere durch ein bestimmtes Ein- und Ausschwingverhalten der Ultraschallwandler erhalten die von den Ultraschallwandlern 5 und 6 der Übertragungsstrecke 3 erzeugten elektronischen Schwingungspakete, z.B. P14, P15, P16, eine für die Übertragungsstrecke charakteristische Gestaltung, die z.B. für das elektrische Schwingungspaket P14 in Fig. 3 näher dargestellt ist. Dieses Schwingungspaket enthält einen Einschwingbereich 21 mit Schwingungen ständig zunehmender Amplituden und einen eingeschwungenen Bereich 22 mit Schwingungsamplituden 23 konstanten Amplitudenwertes A0. Zur Bestimmung des Empfangszeitpunktes t11 eines Ultraschallsignales 15 wird bei einer bestimmten Schwingungsamplitude 24 im Einschwingbereich 21 des zugehörigen elektrischen Schwingungspaketes P14 der erste Schnittpunkt 25 ermittelt, an dem diese Amplitude erstmals einen Meßpegel 26 kreuzt, der in einem bestimmten Verhältnis upm/A0 zum Amplitudenwert A = der der Schwingungsamplituden 23 im eingeschwungenen Bereich 22 des elektrischen Schwingungspaketes P14 steht und bei dem diese Verhältniszahl q deutlich kleiner ist als die Zahl eins.

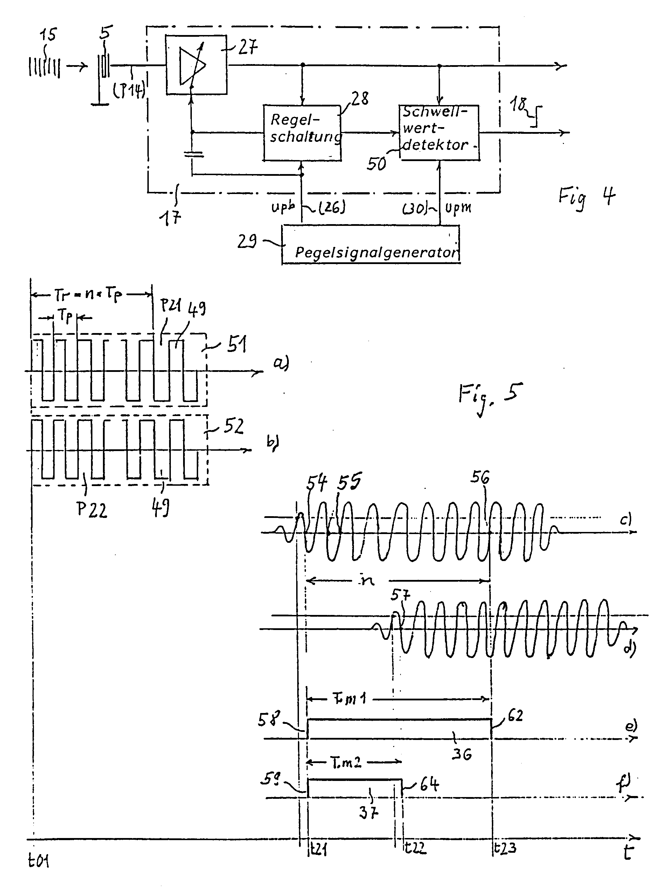

In Fig. 4 ist ein Blockschaltbild eines Signaldetektors 17 dargestellt, der den für die weitere Messung erforderlichen Empfangszeitpunkt t11 eines empfangenen Ultraschallsignales feststellt und zu diesem Zeitpunkt eine Schaltflanke erzeugt. Der Signaldetektor 17 enthält einen regelbaren Verstärker 27, dessen Verstärkung von einer Regelschaltung 28 geregelt wird. Dem regelbaren Verstärker 27 werden die von dem elektroakustischen Wandler 5 des Meßkanals 32 erzeugten elektrischen Schwingungspaketes P14 zugeführt. Das Ausgangssignal des regelbaren Verstärker 27 wird in der Regelschaltung 28 mit einem von einem Pegelsignalgenerator 29 der Meßanordnung erzeugten Bezugspegel 30 verglichen und der regelbare Verstärker 27 an seinen Regelausgang 31 so lange geregelt, bis die Amplitudenwerte A0 der Amplituden 23 der Schwingungen im eingeschwungenen Bereich 22 des elektrischen Schwingungspaketes P14 gleich dem Pegelwert upb des Bezugspegels 30 sind. Dann wird ein Schwellwertschalter 50 wirksam geschaltet, dessen Schwellwert durch einen an den Schwellwertschalter angelegten, im Pegelsignalgenerator 29 erzeugten Meßpegel 26 (Fig. 3) auf den Pegelwert upm dieses Meßpegels eingestellt. Jedesmal, wenn erstmals eine Schwingung 24 eines auf den Bezugspegel 30 eingeregelten elektrischen Schwingungspaketes P14 diesen Schwellwert überschreitet, erzeugt der Signaldetektor an diesem zeitlichen Schnittpunkt 25 eine Schaltflanke 18.

Die auf den beiden Meßkanälen 32 und 33 der in Fig. 1 dargestellten Meßanordnung von den Signaldetektoren 17 erzeugten Signalflanken 18, 19, 20 werden einer Meßschaltung 34 zugeführt, die für den Zeitabstand T.m1 der beidem im ersten Meßkanal 32 für das erste Ultraschallsignal 15 erzeugten Schaltflanken 18 und 20 einen ersten Meßimpuls 36 der Impulslänge T.m1 erzeugt, der im Diagramm h) der Fig. 2 dargestellt ist, und für den Zeitabstand T.m2 der beiden im ersten Meßkanal 32 und im zweiten Meßkanal 33 erzeugten ersten Schaltflanken 18 und 19 einen zweiten im Diagramm i) der Fig. 2 dargestellten Meßimpuls 37 der Impulslänge T.m2 erzeugt. Der zweite Meßimpuls 37 wird einer Verhältniswertschaltung 38 zugeführt, die während der Dauer des ersten Meßimpulses 36 wirksam geschaltet wird. Während dieser Zeit bildet die Verhältniswertschaltung 38 nach der Art eines Impulsbreitendemodulators aus dem Impulspausenverhältnis des zweiten Meßimpulses 37 eine Verhältniszahl q, die gleich dem Quotient der Impulsdauer der beiden Meßimpulse 36 und 37 ist, nämlich q = T.m2/T.m1, oder einen diesem Quotienten entsprechenden elektrischen Wert. Dieser Wert wird anschließend in einem Multiplizierer 39 mit dem von der Ablaufsteuerschaltung 14 oder von einer dem Mulitplizierer nachgeschalteten Auswert- und Anzeigeschaltung 40 gelieferten der Impulsdauer T.m1 des ersten Meßsignals 36 entsprechenden Bezugszeit Tr multipliziert. Am Ausgang 41 des Multiplizierers 39 steht dann der tatsächliche Zeitwert dT1 des Zeitabstandes der beiden Empfangszeitpunkte t11 und t12 der beiden auf der ersten Übertragungsstrecke 3 übertragenen, einander zugehörigen Schallsignale 15 und 16 zur Verfügung. Dessen Genauigkeit hängt nur noch von der Genauigkeit der Bestimmung der Empfangszeitpunkte t11, t12 und t13 und der Genauigkeit der analogen Verhältniswertbildung ab. Aus diesem Zeitwert dT1 = Tr x T.m2/T.m1 und der mittleren Laufzeit der Ultraschallsignale 15 und 16 über die Übertragungsstrecke 3 ermittelt die Auswert- und Anzeigeschaltung 40 nach dort abgelegten Rechenregeln und Tabellen die Strömungsgeschwindigkeit des das Meßrohr 1 durchströmenden Mediums 2.

Bei einem Medium, dessen Strömungsgeschwindigkeit im Meßrohr 1 Null ist, erzeugt der Signaldetektor 17 des zweiten Meßkanales 33 ein Schaltsignal 19 bei einem Empfangszeitpunkt t120, so daß der zweite Meßimpuls 37 eine Impulsdauer T.m0 aufweist, die mit der Impulsdauer T.m1 des ersten Meßimpulses 36 im gleichen Verhältnis steht wie die Versatzzeit Tv des zweiten Ultraschallsignales 16 zur übertragenen Bezugszeit Tr. Ist diese Verhältniszahl beispielsweise 0,5, liegt bei einer analogen Anzeige der Strömungsgeschwindigkeit des zu messenden Mediums 2 der Nullpunkt der Anzeige in der Mitte der Anzeigeskala, so daß bei einer Messung der Strömungsgeschwindigkeit die Werte der Strömungsgeschwindigkeit und die Strömungsrichtung des zu messenden Mediums 2 durch das Meßrohr 1 angezeigt werden.

Darüber hinaus kann durch die Wahl bestimmter Bezugszeiten Tr1, Tr2 usw. der auf einer bestimmten Skalenlänge der Anzeigeskala anzeigbare Bereich der Strömungsgeschwindigkeiten verändert und entsprechend den Wünschen des Benutzers eingestellt werden.

Liegt bei dem dargestellten Ausführungsbeispiel der Empfangszeitpunkt t12 des zweiten Ultraschallsignales 16 außerhalb der Impulszeit des ersten Meßimpulses 36 oder zu dicht am Empfangszeitpunkt t120 für den Nullpunkt der Anzeigeskala, erzeugt die Meßschaltung 34 auf einer Steuerleitung 42 ein dementsprechendes Steuersignal, das selbsttätig in der Ablaufsteuerschaltung 14 einen solchen Bezugswert Tr1 oder Tr2 usw. auslöst, daß der Empfangszeitpunkt der in Wiederholung danach abgestrahlten zweiten Ultraschallsignale 16 innerhalb der Impulszeit der ersten Meßimpulse 36 und in genügendem Abstand vom Empfangszeitpunkt t120 für den Nullpunkt liegt.

Werden die beiden einander zugeordneten Ultraschallsignale 15 und 16 zum gleichen Zeitpunkt t01 oder mit nur einer geringen Versatzzeit Tv gegenüber der zu übertragenden Bezugszeit Tr abgestrahlt, so daß der Nullpunkt der Anzeigeskala für die Strömungsgeschwindigkeit am Anfang der Skala liegt, und soll die Strömungsgeschwindigkeit des das Meßrohr 1 durchströmenden Mediums 2 in beiden Strömungsrichtungen gemessen werden können, wird die Bezugszeit Tr sowohl mit dem ersten Ultraschallsignal 15 als auch mit dem zweiten Ultraschallsignal 16 übertragen. Die übertragene Bezugszeit des Ultraschallsignales der beiden einander zugeordneten Ultraschallsignale, dessen Empfangszeitpunkt als ersten detektiert wird, wird als ersten Meßimpuls mit einer der übertragenen Bezugszeit entsprechenden Impulszeit ausgewertet, innerhalb der dann der Empfangszeitpunkt des anderen der beiden einander zugeordneten Ultraschallsignale liegen muß. Jeder der beiden Meßkanäle 32 und 33 ist einer Strömungsrichtung zugeordnet, im dargestellten Ausführungsbeispiel der zweite Meßkanal der mit dem Bezugszeichen 4 angegebenen Strömungsrichtung. Dadurch zeigt der Meßkanal, der zuerst eines der beiden einander zugeordneten Ultraschallsignale 15 oder 16 empfängt und detektiert, zusätzlich die Strömungsrichtung des das Meßrohr 1 durchströmenden Mediums 2 an und übermittelt sie an die Auswert- und Anzeigeschaltung 40, die die Strömungsrichtung gesondert anzeigt.

Der zweite Meßteil 13 der in Fig. 1 dargestellten Meßanordnung, die zur Messung der Dichte des durch das Meßrohr 1 strömenden Mediums 1 vorgesehen ist, enthält ebenfalls zwei Meßkanäle 43 und 44 mit je einem Signaldetektor 17. Der erste Meßkanal 43 ist an den elektroakustischen Wandler 45 der Ultraschallübertragungsstrecke 9 des Referenzrohres 10 des erweiterten Raumes 7 des Meßrohres 1 angeschlossen. Diese Übertragungsstrecke wird von einem Ultraschallsender 46 gespeist. Der zweite Meßkanal 44 ist an den empfangsseitigen elektroakustischen Wandler 47 der zweiten Ultraschallübertragungsstrecke 8 im erweiterten Raum des Meßrohres 1 angeschlossen, die von einem Ultraschallsender 48 gespeist wird. Im dargestellten Ausführungsbeispiel sind die beiden Ultraschallübertragungsstrecken 8 und 9 so ausgebildet, daß ihre Ubertragungsstrecken geometrisch gleich lang sind und nicht von der Strömung des das Meßrohr 1 durchströmenden Mediums beeinflußt werden.

Die beiden einander zugeordneten Ultraschallsignale 51 und 52 einer Reihe wiederholt abgestrahlter Ultraschallsignalpaare, die in der Ablaufsteuerschaltung 14 erzeugt werden, werden zum gleichen Zeitpunkt t01 von den beiden Ultraschallsendern 46 und 48 in den Übertragungsstrecken 8 und 9 abgestrahlt, wie in den Diagrammen a) und b) der Fig. 5 dargestellt ist. Jedes Ultraschallsignal besteht aus einem Schwingungspaket P21, P22 mehrerer aneinander gereihter Schwingungen 49 einer Schwingungsfrequenz im Bereich der Dickenschwingungsresonanz der Ultraschallwandler, entsprechend den Schwingungspaketen P11 und P12 des ersten Meßteils 12 der in Fig. 1 dargestellten Meßanordnung. Der zweite Meßteil 13 unterscheidet sich im wesentlichen darin vom ersten Meßteil 12, daß die zu übertragende Bezugszeit nicht durch den Abstand zweier Schwingungspakete eines Ultraschallsignales sondern durch die Zeitspanne einer bestimmten Anzahl aufeinanderfolgender Schwingungen 49 übertragen wird, wie im Diagramm a) der Fig. 5 angedeutet ist.

Auf der Empfangsseite des in Fig. 1 dargestellten Meßteiles 13 der Meßanordnung ist in jedem Meßkanal 43 und 44 zusätzlich ein Nullstellendetektor 53 angeordnet, der vom Flankensignal 18, 19 des zugehörigen Signaldetektors 17 wirksam gestaltet wird. Dadurch werden die dem Flankensignal nachfolgenden Nullstellen 54 bis 57 der Schwingungen der bei der Umwandlung der mit den elektroakustischen Wandlern 45 und 47 aus den empfangenen Ultraschallsignalen 51 und 52 gebildeten und in den Diagrammen c) und d) der Fig. 5 dargestellten elektrischen Schwingungspakete P24 und P25 detektiert. Die erste Nullstelle 54 im ersten Meßkanal 43 bestimmt den Empfangszeitpunkt t21 bis über die Referenzübertragungsstrecke 9 übertragenen Ultraschallsignales 37, die in der den beiden Meßkanälen 43 und 44 nachgeschalteten Meßschaltung 60 gebildet werden und in den Diagrammen e) und f) der Fig. 5 dargestellt sind. Außerdem schaltet die Schaltflanke 18 des Signaldetektors 17 des ersten Meßkanales 43 einen Zähler 62 in der Meßschaltung 60 wirksam, der die Nullstellen 54 und 55 der bestimmten Anzahl (n) von aufeinanderfolgenden Schwingungen 61 des elektrischen Schwingungspaketes P21 zählt, deren aneinandergereihte

Periodenzeiten insgesamt eine Zeitspanne $T.m1$ bildet, die die übertragene Bezugszeit Tr darstellt. Die am Ende dieser Zeitspanne $T.m1$ bzw. am Ende dieser Anzahl von aufeinanderfolgender Schwingungen detektierte Nullstelle 56 erzeugt zum Zeitpunkt t23 die Abschlußflanke 62 des ersten Meßimpulses 36. Die erste Nullstelle 57 im zweiten Meßkanal 54 bestimmt den Empfangszeitpunkt t22 über die zweite Ultraschallübertragungsstrecke 8 übertragenen Ultraschallsignales 52 und die Abschlußflanke des zweiten Meßimpulses 37. Die beiden Meßimpulse 36 und 37 entsprechen den beiden Meßimpulsen 36 und 37 des ersten Meßteiles 12 der Meßanordnung und werden in den nachfolgenden Schaltungsteilen 38 und 39 genauso weiterverarbeitet wie im ersten Meßteil 12 der Meßanordnung.-Durch die Verwendung der Nulldurchgänge für die Bestimmung der Empfangszeitpunkte der Ultraschallsignale 51 und 52 im zweiten Meßteil 13 der Meßanordnung wird gegenüber der Empfangszeitpunktbestimmung im ersten Meßteil 12 der Meßanordnung die Meßgenauigkeit verbessert, da damit die geringen Zeitschwankungen, die im ersten Meßteil 12 bei der Amplitudendetektion mit dem bestimmten Meßpegel 26 auftreten können, ausgeschlossen sind.

Der zweite Meßimpuls 37 und der vom Multiplizierer 39 erzeugte Zeitwert dT2 für den Zeitversatz T.m2 der Empfangszeitpunkte t21 und t22 der beiden einander zugeordneten Ultraschallsignale 51 und 52 des zweiten Meßteiles 13 werden der Auswert- und Anzeigeschaltung 40 zugeführt, die daraus nach dazu vorgesehenen Rechenregeln und Tabellen den gemessenen Wert der Dichte oder eines der Dichte entsprechenden Parameters des das Meßrohr 1 der Meßanordnung durchströmenden Mediums ermittelt und anzeigt.

**Patentansprüche**

1. Verfahren zum Messen des Zeitabstandes der Empfangszeitpunkte (t11, t12) zweier einander zugeordneter Ultraschallsignale (15, 16), die je, ein aus mehreren Ultraschallschwingungen bestehendes Schwingungspaket enthalten und die wiederholt in ein Übertragungsmedium (2) abgestrahlt und an einem bestimmten Empfangsort (5, 6) im Übertragungsmedium empfangen und in entsprechende elektrische Schwingungssignale (P14, P15, P16) umgewandelt werden und deren Empfangszeitpunkte (t11, t12) anschließend detektiert werden, wobei die Schwingungspakete der beiden Ultraschallsignale (15,16) durch Einspeisen sendeseitig erzeugter elektrischer Schwingungspakete (P11, P12, P13) in elektroakustische Ultraschallwandler (5, 6) gebildet werden und eine Ablaufsteuerschaltung (14) die Erzeugung und Einspeisung der sendeseitigen elektrischen Schwingungspakete steuert und den Beginn dieser Schwingungspakete als ausgezeichnete Zeitpunkte (t01, t02, t03) dieser Schwingungspakete festlegt und wobei in dem Verfahren aus den detektierten elektrischen Schwingungen ein erster Messwert (T.m1) eines bestimmten Zeitabstandes und ein zweiter Messwert (T.m2) des Zeitabstandes zwischen den beiden Empfangszeitpunkten (t11, t12) der beiden empfangenen Ultraschallsignale (15, 16) ermittelt wird, dadurch gekennzeichnet,
   - daß zur Messung eines von Störungen auf der Ultraschallübertragungsstrecke (3) unabhängigen Zeitwertes (dT1) eines von Übertragungsstörungen abhängigen Zeitabstandes der Empfangszeitpunkte (t11, t12) der empfangenen, einander zugeordneten Ultraschallsignale (15, 16) die Abstrahlung der Ultraschallsignale von der Ablaufsteuerschaltung (14) so gesteuert wird, daß wenigstens einem dieser beiden Ultraschallsignale (15) eine bestimmte Bezugszeit (Tr) in Form eines Zeitabstandes zweier ausgezeichneter Zeitpunkte (t01, t03; 54, 56) aufgeprägt wird,
   - daß der ermittelte erste Messwert (T.m1) der Messwert des ebenfalls von Störungen auf der Übertragungsstrecke (3) abhängigen Zeitabstandes zwischen den beiden mit dem wenigstens einen Ultraschallsignal (15) übertragenen, am Empfangsort empfangenen und detektierten ausgezeichneten Zeitpunkten (t11, t13) ist
   - und daß zur Darstellung des tatsächlichen, von Störungen auf der Übertragungsstrecke unabhängigen Zeitwertes (dT1) des von Störungen auf der Übertragungsstrecke abhängigen Zeitabstandes der beiden Empfangszeitpunkte (t11, t12) der zwei an den beiden Empfangsorten (5, 6) empfangenen und detektierten, einander zugeordneten Ultraschallsignale (15, 16) ein Quotient (q) aus dem zweiten Messwert (T.m2) und dem ersten Messwert (T.m1) gebildet wird und dieser Quotient mit dem ursprünglichen Wert (Tr) der Bezugszeit, wie sie dem wenigstens einen Ultraschallsignal (15) bei der Abstrahlung von der Ablaufsteuerschaltung aufgeprägt wird, multipliziert wird.

2. Messverfahren nach Anspruch 1, dadurch gekennzeichnet, daß die die Bezugszeit (Tr) darstellende Zeitstrecke die Strecke der Summe einer bestimmten Anzahl(n) aufeinanderfolgender Schwingungen (49) eines Schwingungspaketes (21) der diese Zeitstrecke übertragenden Ultraschallsignale (51) ist
   - und daß der dieser Zeitstrecke entsprechende Messwert (T.m1) durch die Summe der aneinandergereihten Periodenzeiten der entsprechenden Schwingungen (61) dieser am Empfangsort (Wandler 45) empfangenen und detektierten Ultraschallsignale (51) gewonnen wird.

3. Messverfahren nach Anspruch 1, dadurch gekennzeichnet,
   - daß wenigstens jeweils eines der beiden einander zugeordneten Ultraschallsignale (15) ein zweites, dem ersten Schwingungspaket (P 11) gleichartiges Schwingungspaket (P 13) enthält, das in einem Zeitabstand nach dem ersten Schwingungspaket in das Übertragungsmedium (2) abgestrahlt wird, der gleich der Bezugszeit (Tr) ist,
   - und daß die ausgezeichneten Zeitpunkte, die die Zeitstrecke für den der bestimmten Bezugszeit (Tr) entspechenden Messwert (T.m1) begrenzen, die Detektionszeitpunkte (25) der Schwingungspakete (P11, P13) des am Empfangsort empfangenen Ultraschallsignales (15) sind.

4. Messverfahren nach einem der Ansprüche 1 bis 3, dadurch gekennzeichnet, daß mehrere bestimmte Bezugszeiten (Tr 1, Tr 2) wählbar sind und daß jeweils diejenige bestimmte Bezugszeit ausgewählt wird, für die der empfangsseitig ermittelte Messwert (T.m1) des Zeitabstandes der mit den Ultraschallsignalen (15; 51) übertragenen, der ausgewählten Bezugszeit zugehörigen zwei ausgezeichneten Zeitpunkte (t 11 und t 13; 54 und 56) nächststehend größer ist als der empfangsseitig ermittelte Messwert (T.m2) des Zeitabstandes der Empfangszeitpunkte (t11,t12) t 21, t 22) zweier einander zugeordneter Ultraschallsignale (15, 16; 51, 52).

5. Messverfahren nach einem der Ansprüche 1 bis 4, dadurch gekennzeichnet, daß das zweite Ultraschallsignal (16) der beiden einander zugeordneten Ultraschallsignale (15, 16) gegenüber dem ersten, einen der bestimmten Bezugszeit (Tr) entsprechenden Zeitabstand übertragenden Ultraschallsignal (15) um eine bestimmte Versatzzeit (Tv) verzögert abgestrahlt wird, die um einen bestimmten Faktor (a) kleiner ist als die mit dem übertragenen Zeitabstand dargestellte Bezugszeit (Tr).

6. Meßverfahren nach einem der Ansprüche 1 bis 5, dadurch gekennzeichnet,
   - daß der Empfangszeitpunkt (t11) eines am Empfangsort empfangenen Ultraschallsignals (15) durch eine Schaltflanke (18) dargestellt wird, die bei einem Vergleich der beim Empfang in ein elektrisches Schwingungssignal (P14, P16) umgewandelten Ultraschallsignale mit einem Meßpegel (26) dann erzeugt wird, wenn eine Schwingung (24) des Einschwingbereiches (21) des umgewandelten elektrischen Schwingungspaketes (P14) erstmals den Meßpegel (26) überschreitet,
   - und daß der Pegelwert (upm) des Meßpegels (26) um einen voreingestellten, deutlich unter Eins liegenden Faktor (q) kleiner ist als der Amplitudenwert (A0) der Schwingungen (23) in einem bestimmten eingeschwungenen Bereich (22) des umgewandelten Schwingungspaketes (P14).

7. Meßverfahren nach Anspruch 6, dadurch gekennzeichnet,
   - daß das empfangene und in ein elektrisches Schwingungssignal (P14, P16) umgewandelte Schallsignal (15) mit einem voreingestellten Bezugspegel (30) verglichen wird und pegelmäßig solange verändert wird, bis der Amplitudenpegel (A0) eines bestimmten eingeschwungenen Bereiches (22) des empfangenen und umgewandelten Ultraschallsignals gleich dem Bezugspegel (30) ist,
   - und daß der Meßpegel (26) auf den Amplitudenwert (A0) der Schwingungen (23) im bestimmten eingeschwungenen Bereich (22) des elektrischen Schwingungspaketes(P14) des so eingestellten, empfangenen und umgewandelten Ultraschallsignals (15) bezogen wird.

8. Meßverfahren nach einem der Ansprüche 1 bis 7, dadurch gekennzeichnet,
   - daß die zwei einander zugeordneten Ultraschallsignale (51, 52) in unterschiedliche Übertragungsmedien (2, 11) abgestrahlt werden
   - und daß das eine Übertragungsmedium (11) ein Bezugsmedium mit einer bestimmten Übertragungsstrecke (9) bestimmter Übertragungseigenschaften ist.

9. Anordnung zur Durchführung des Messverfahrens nach einem der Ansprüche 1 bis 8
   - mit zwei Ultraschallübertragungsstrecken, von denen jede an einem Ende einen Ultraschallsender und am anderen Ende als Empfangsort einen elektroakustischen Wandler enthält,
   - mit einer den elektroakustischen Wandlern nachgeschalteten Messschaltung, in der jedem elektroakustischen Wandler (5, 6) ein Signaldetektor (17) nachgeschaltet ist,
   - mit einer Auswertschaltung (40)
   - und mit einer Ablaufsteuerschaltung (14) zur Steuerung der Erzeugung sendeseitiger elektrischer Schwingungspakete (P11, P12, P13) und der Einspeisung dieser Schwingungspakete in die beiden Ultraschallssender und zur Festlegung des Beginns dieser Schwingungspakete als ausgezeichnete Zeitpunkte (t01, t02, t03) dieser Schwingungspakete, dadurch gekennzeichnet,
   - daß die Signaldetektoren (17) beim Erkennen eines empfangenen elektrischen Schwingungspaketes (P14, P15, P16) eines Ultraschallsignales eine Schaltflanke

(18, 19, 20) erzeugen,

- daß die Meßschaltung (34) ein erstes, von den Schaltflanken (18, 20) des dem ersten Ultraschallwandler (5) zugeordneten Signaldetektors (17) begrenztes elektrisches Meßsignal (36) erzeugt, dessen Signalwert dem Messwert (T.m1) des Zeitabstandes zweier detektierter Zeitpunkte (t11, t13) des mit dem ersten Ultraschallwandler (5) empfangenen Ultraschallsignales (15) entspricht, wobei die detektierten Zeitpunkte zwei von der Ablaufsteuerschaltung dem gesendeten Ultraschallsignal aufgeprägten ausgezeichneten Zeitpunkten (t01, t03) entsprechen, deren Zeitabstand der Betrag einer bestimmten Bezugszeit (Tr) ist, und daß die Meßschaltung (34) ein zweites, von den ersten Schaltflanken (18, 19) der den beiden Ultraschallwandlern (5, 6) nachgeschalteten Signaldetektoren (17) begrenztes elektrisches Meßsignal (37) erzeugt, dessen Signalwert dem Messwert (T.m1) des Zeitabstandes der Empfangszeitpunkte (t11, t12) der beiden empfangenen, einander zugeordneten Ultraschallsignale (15, 16) entspricht,

- und daß die Meßschaltung eine Verhältniswertschaltung (38) zur Bildung einer Verhältniszahl (q) aus dem Quotient des Messwertes (T.m2) des zweiten elektrischen Meßsignales (37) zum Messwert (T.m1) des ersten elektrischen Meßsignales (36) und einen Multiplizierer (39) zur Multiplikation der Verhältniszahl (q) mit dem Wert der bestimmten Bezugszeit (Tr) enthält, die dem Multiplizierer zur Ausgabe eines tatsächlichen, von Störungen auf der Übertragungsstrecke (3) unabhängigen Wertes (dT1) des Zeitabstandes der Empfangszeitpunkte (t11, t12) der beiden empfangenen und einander zugeordneten Ultraschallsignale (15, 16) von der Ablaufsteuerschaltung (14) oder der Auswertschaltung (40) geliefert wird.

10. Anordnung nach Anspruch 9, dadurch gekennzeichnet,

- daß der Signaldetektor (17) in seinem Signalweg einen Signalverstärker (27) enthält, dessen Verstärkung an einem Regeleingang (31) einstellbar ist,
- daß zwischen dem Ausgang des Verstärkers und dessen Regeleingang eine Regelschaltung (28) angeordnet ist, die einen vorbestimmten eingeschwungenen Bereich (22) des empfangenen Ultraschallsignales (15) erfaßt und die Verstärkung des Verstärkers so einstellt, daß die Amplituden der Schwingungen (23) dieses Bereiches gleich einem bestimmten Bezugspegel (30) sind,

- und daß im eingeregelten Zustand ein dem Signalverstärker nachgeschalteter Schwellwertschalter (50) eine Schaltflanke (18) erzeugt, sobald eine Schwingung (24) des Einschwingbereiches (21) eines auf dem Signalweg des Signaldetektors übertragenen elektrischen Schwingungspaketes (P14) eines eingangs des Meßkanals (32) empfangenen Ultraschallsignals (15) einen bestimmten Meßpegel (26) überschreitet.

11. Messanordnung nach Anspruch 9 oder 10, dadurch gekenngekennzeichnet, daß die Meßschaltung (34) als erstes elektrisches Signal einen Messimpuls (36) erzeugt, dessen Impulslänge dem Messwert (T.m1) des Zeitabstandes der beiden ausgezeichneten Zeitpunkten (t 11, t 13) des die bestimmte Bezugszeit (Tr) übertragenden Ultraschallsignales (15) entspricht, und als zweites elektrisches Signal einen Messimpuls (37) erzeugt, dessen Impulslänge dem Messwert (T.m2) des Zeitabstandes der Empfangszeitpunkte (t 11, t 12) der beiden einander zugeordneten Ultraschallsignale (15, 16) entspricht

- und daß die Verhältniswertschaltung (38) eine Impulsbreitenintegrationsschaltung ist, die nur während des von der Meßschaltung (34) ermittelten und ausgegebenen Meßimpulses (36) für den Bezugszeitabstand (T.m1) wirksam geschaltet ist.

## Claims

1. Method for measuring the time differences between the receiving time positions (t11, t12) of two associated ultrasonic signals (15, 16) each containing an oscillation pack consisting of several ultrasonic oscillations and which are repeatedly irradiated into a transmitting medium (2) and received at a predetermined receiving location (5, 6) within said transmitting medium, and converted into corresponding electrical oscillating signals (P14, P15, P16) whose receiving time positions (t11, t12) are being detected thereafter,

with said oscillation packs of said two ultrasonic signals (15, 16) being formed by the feeding of electrical oscillation packs (P11,P12,P13) as generated at the transmitting end, into electroacoustic ultrasonic transducers (5, 6),and a sequence control circuit (14) controlling both the generation and the feeding-in of said electrical oscillation packs as generated at the transmitting end, and fixing the beginning of these oscillation packs as the marked time positions (t01, t02, t03) of these oscillation packs,

with a first measured value (T.m1) relating to a predetermined time difference, and a second measured value (T.m2) relating to the time difference between said two receiving time positions (t11, t12) of said two received ultrasonic signals (15, 16) being ascertained in the course of the method from said detected electrical oscillations,

**characterized in**

- that for the purpose of measuring a time value (dT1) independent of any interferences existing on the ultrasonic transmission section (3), of a time difference between the receiving time positions (t11, t12) of said received, associated ultrasonic signals (15, 16), which is dependent on transmission interferences, the radiation of said ultrasonic signals is controlled in such a way by said sequence control circuit (14) that at least upon one of said two ultrasonic signals (15) there is impressed a certain reference time (Tr) in the form of one time difference between two marked time positions (t01, t03; 54, 56),

- that said ascertained first measured value (T.m1) is the measured value relating to the time difference between said two marked time positions (t11, t13) likewise dependent on interferences along the transmission section (3) and transmitted by at least the one ultrasonic signal (15), and received and detected at the receiving location, and

- that for the purpose of representing the actual time value (dT1) as independent of interferences along the transmission path (section), of the time difference between the said two receiving time positions (t11, t12) as dependent on interferences along the transmission path, of the two associated ultrasonic signals (15, 16) as received and detected at the two receiving locations (5, 6), there is formed a quotient (q) from both said second measured value (T.m2) and said first measured value, with said quotient then being multiplied by the original value (Tr) of said reference time as impressed upon at leasst the one of said ultrasonic signals (15) during transmission, by said sequence control circuit.

2. Measuring method as claimed in claim 1, **characterized** in

- that the time distance representing said reference time (Tr) is the distance of the sum of a predetermined number (n) of successively following oscillations (49) of one oscillation pack (21) of said ultrasonic signals (51) transmitting this particular time distance, and

- that the measured value (T.m1) as corresponding to this time distance is ascertained by forming the sum of the lined up period times of the corresponding oscillations (61) of said ultrasonic signals (51) as received at the receiving location (transducer 45) and detected.

3. Measuring method as claimed in claim 1, **characterized** in

- that at least one of said two associated ultrasonic signals (15) contains a second oscillation pack (P 13) bearing a certain resemblance to said first oscillation pack (P 11), which is transmitted into said transmitting medium (2) at a time difference following said first oscillation pack, which is equal to said reference time (Tr), and

- that said marked time positions which serve to restrict the time distance for said measured value (T.m1) corresponding to said predetermined reference time (Tr), are the detection time positions (25) of the oscillation packs (P11, P13) of the ultrasonic signal (15) as received at said receiving location.

4. Measuring method as claimed in one of the foregoing claims 1 through 3, **characterized** in that several of said predetermined reference times (Tr1, Tr2) are selectable, and that each time that particular predetermined reference time is selected with respect to which the measured value (T.m1) as ascertained at the receiving end and referring to the time distance of said two marked time positions (t11 and t13; 54 and 56) associated with the selected reference time and transmitted with said ultrasonic signals (15; 51), is the next higher one than the measured value (T.m2) as ascertained at the receiving end and referring to the time distance between the receiving time positions (t11, t12, t21, t22) of two associated ultrasonic signals (15, 16; 51, 52).

5. Measuring method as claimed in one of the foregoing claims 1 through 4, **characterized** in that said second ultrasonic signal (16) of said two associated ultrasonic signals (15, 16) is transmitted by being delayed by a certain delay time (Tv) compared to said first ultrasonic signal (15) as transmitted at a time distance corresponding to said predetermined reference time (Tr),with said delay time (Tv) being shorter by a predetermined factor (a) than said reference time (Tr) as represented by the transmitted time distance.

6. Measuring method as claimed in any one of claims 1 through 5, **characterized** in
   - that said receiving time position (t11) of an ultrasonic signal (15) as received at the receiving location, is represented by a switching edge (18) which, in the course of a comparison of said ultrasonic signals as converted into an electrical oscillation signal (P14, P16) upon reception, with a measuring level (26),is always generated when one oscillation (24) of the transient range (21) of said converted electrical oscillation pack (P14) for the first time exceeds said measuring level (26), and
   - that the level value (upm) of said measuring level (26) is by a preset factor (q) which is lying distinctly below unity, smaller than the amplitude value (AO) of the oscillations (23) within a certain steady-state range (22) of said converted oscillation pack (P14).

7. Measuring method as claimed in claim 6, **characterized** in
   - that said received ultrasonic signal (15) as converted into an electrical oscillation signal (P14, P16) is compared with a preset reference level (30) and is so long varied with regard to its level until the amplitude value (AO) of a certain steady-state range (22) of the received and converted ultrasonic signal has become equal to said reference level (30), and
   - that said measuring level (26) is referred to the amplitude value (AO) of said oscillations (23) within the certain steady-state range (22) of the electrical oscillation pack (P14) of the thus adjusted, received and converted ultrasonic signal (15).

8. Measuring method as claimed in any one of claims 1 through 7, **characterized** in

   - that said two ultrasonic signals (51, 52) as associated with one another are transmitted into different transmitting media (2, 11) and
   - that the one of said transmitting media (11) is a reference medium having a certain transmission path (9) of certain transmission properties.

9. Arrangement for carrying out the measuring method as claimed in any one of claims 1 through 8,
   - comprising two ultrasonic transmission paths of which each contains an ultrasonic transmitter at one end and an electroacoustic transducer as the receiving location at the other end,
   - comprising a measuring circuit following said electroacoustic transducers in circuit, in which each of said electroacaustic transducers (5, 6) is followed by a signal detector (17),
   - comprising an evaluating circuit (40), and
   - further comprising a sequence (operational) control circuit (14) for controlling at the transmitting end the generation of electrical oscillation packs (P11, P12, P13) and the feeding of said oscillation packs into said two ultrasonic transmitters, as well as for fixing the beginning (advent) of said oscillation packs for serving as the marked or qualified time positions (t01, t02, t03) of said oscillation packs,
   **characterized** in
   - that said signal detectors (17), upon recognizing a received electrical oscillation pack (P14, P15, P16) of an ultrasonic signal, serve to generate a switching edge (18, 19, 20),
   - that said measuring circuit (34) generates a first electrical measuring signal (36) which is restricted by said switching edges (18, 20) of the signal detector (17) as associated with the first one of said ultrasonic transducers (5), with the signal value of said measuring signal corresponding to the measuring value (T.m1) of the time difference between two detected time positions (t11, t13) of the ultrasonic signal (15) as received by the first ultrasonic transducer (5), with said detected time positions corresponding to two time positions (t01, t03) marked and impressed by said sequence (operational) control circuit upon the transmitted ultrasonic signal, and the time difference thereof being identical to the amount of a certain reference time (Tr), and

- that said measuring circuit (34) generates a second electrical measuring signal (37) which is restricted by the first switching edges (18, 19) of the said signal detectors (17) which follow in circuit the said two ultrasonic transducers (5, 6), with the signal value of said measuring signal corresponding to the measuring value (T.m1) of the time difference between the receiving time positions (t11, t12) of the two received ultrasonic signals (15, 16) as associated with one another, and further

- that said measuring circuit contains a proportional value circuit (38) for forming a proportionality factor (q) from the quotient of the measured value (T.m2) of the second electrical measuring signal (37) to the measured value (T.m1) of the first electrical measuring signal (36), as well as a multiplier (39) for multiplying said proportionality factor (q) by the value of said certain predetermined reference time (Tr) which is supplied to said multiplier for causing the latter to provide an actual value (dT1) which is independent of any interferences occurring along the transmission path (3) and refers to the time difference between the receiving time positions (t11, t12) of said two received ultrasonic signals (15, 16) as associated with one another, with said value of the reference time (Tr) being supplied by either said sequence (operational) control circuit (14) or said evaluating circuit (40).

10. Arrangement as claimed in claim 9, **characterized** in

- that said signal detector (17) comprises within its signalling path a signal amplifier (27) whose gain is capable of being adjusted via a control input (31),

- that between the output of said amplifier and its control input there is disposed a control circuit (28) which covers a predetermined steady-state range (22) of the received ultrasonic signal (15) and adjusts the gain of said amplifier in such a way that the amplitudes of the oscillations (23) of said particular range will become equal to a certain or predetermined reference level (30), and

- that in the controlled state a threshold switch (50) which is arranged in the circuit to follow the signal amplifier, generates a switching edge (18) as soon as one oscillation (24) within the steady-state range (21) of an electrical oscillation pack (P14) of an ultrasonic signal (15) transmitted along the signal path of the signal detector and received at the input of the measuring channel (32), exceeds a predetermined measuring level (26).

11. Measuring arrangement as claimed in claim 9 or 10, **characterized** in

- that said measuring circuit (34), as a first electrical signal, generates a measuring pulse (36) whose pulse width corresponds to the measured value (T.m1) of the time difference between the said two marked time positions (t11, t13) of the ultrasonic signal (15) transmitting said predetermined reference time (Tr) and, as a second electrical signal, generates a measuring pulse (37) whose pulse width corresponds to the measured value (T.m2) of the time difference between the said two receiving time positions (t11, t12) of said two ultrasonic signals (15, 16) as associated with one another, and

- that said proportional value circuit (38) is a pulse-width integrating circuit which is only rendered active during the period of the measuring pulse (36) as ascertained and transmitted by said measuring circuit (34), with respect to said reference time difference (T.m1).

**Revendications**

1. Une procédure pour la mesure de l'intervalle de temps du moment de réception (t11, t12) de deux signaux à ultrason (15, 16) conjugués, qui comprennent respectivement un groupe d'oscillation composé de plusieurs oscillations à ultrason, diffusées de manière répétée dans un système de transmission (2) et envoyées vers un lieu précis de réception (5, 6). A la réception par le système de réception, les oscillations à ultrason sont transformées en signaux électriques d'oscillation (P14, P15, P16), dont les moments de réception (t11, t12) sont ensuite détectés. Les groupes d'oscillation des deux signaux à (15, 16) sont transformés par l'introduction de groupes d'oscillation électriques (P11, P12, P13) du côté émission dans des transducteurs à ultrason électro acoustiques (5, 6), un circuit de commande (14) assure la création et l'introduction des groupes d'oscillation électriques du côté émetteur et détermine le début de ces groupes d'oscillation en tant que temps étiquetés (t01, t02, t03) de ces mêmes. Une procédure, avec laquelle on obtient à partir des oscillations électriques détectées une première valeur de mesure (T.m1) d'un intervalle de temps déterminé, et une deuxième valeur de mesure (T.m2) de l'intervalle entre les deux moments de réception (t11, t12) des deux signaux à ultrason (15, 16) reçus, caractérisé par le fait

- que l'émission des signaux à ultrason,nécessaires à la mesure d'une valeur de temps (dT1), indépendamment de la perturbation pendant la transmission (3) à ultrason, et d'un intervalle de temps dépendant des perturbations pendant la transmission des moments de réception (t11, t12) des signaux à ultrason conjugués reçus (15, 16), qui sont pilotées par le circuit de commande (14) de manière à ce que soit attribué au moins à un des deux signaux à ultrason (15) un temps de référence déterminé (Tr) sous forme d'un intervalle de temps de deux moments étiquetés (t01, t03 ; 54, 56);
- que la première valeur de mesure (T.m1) déterminée est la valeur de l'intervalle également dépendante des perturbations pendant la transmission (3) entre les deux moments de réception (t11, t13) transmis étiquetés et détectés avec au moins un signal à ultrason (15) sur le lieu de réception,
- et que pour la représentation de la valeur de temps (dT1) effective, celle-ci est indépendante des perturbations de l'intervalle de temps pendant la transmission, à partir des deux signaux à ultrason conjugués (15, 16), reçus et détectés sur les deux lieux de réception (5, 6), dépendants des perturbations pendant la transmission des deux moments de réception (t11, t12), il sera formé un quotient (q) avec la deuxième et la première valeur de mesure (T.m2, T.m1), et ce quotient sera multiplié avec la valeur initiale (Tr) du temps de référence, comme il est étiqueté sur au moins un signal à ultrason (15) au moment de l'émission à partir du dispositif de gestion de commande.

2. Procédure de mesure selon revendication 1, se caractérisant par le fait

- que le temps de référence (Tr), représentant la durée de temps, est le parcours de la somme d'un certain nombre (n) d'oscillations successives (49) d'un groupe d'oscillations (21) qui lui est la durée de temps du parcours des signaux à ultrason (51),
- et que la valeur de mesure (T.m1) correspondant à ce temps de parcours est obtenue par la somme du temps des périodes successives des oscillations respectives (61) des signaux à ultrason reçus et détectés sur le lieu de réception (transcodeur 45).

3. Procédure de mesure selon revendication 1, se caractérisant par le fait

- qu'au moins un des deux signaux à ultrason conjugués (15) comprend un deuxième groupe d'oscillations (P 11) similaire au premier (P 13,) qui après un laps de temps est émis dans le systèmé de transmission (2) derrière le premier groupe d'oscillations, qui est égal au temps de référence (Tr),
- et que les moments des temps étiquetés, qui délimitent le temps de parcours pour la valeur de mesure (T.m1) correspondant au temps de référence (Tr), sont représentés par les points de détection de temps (25) des groupes d'oscillations (P11, P13) du signal à ultrason (15) reçu sur le lieu de réception.

4. Procédure de mesure selon l'une des revendications 1 à 3, se caractérisant par le fait que plusieurs temps de référence (Tr1, Tr2) peuvent être choisis et qu'est choisi respectivement le temps de référence pour qui la valeur de mesure (T.m1) de l'intervalle de temps déterminée du côté récepteur, transmise par les signaux à ultrason (15; 51), et appartenant au temps de référence choisi des deux moments étiquetés (t11 et t13; 54 et 56), est approximativement plus grand que la valeur de mesure localisée (T.m2) de l'intervalle de temps des moments de réception (t11, t12, t21, t22) de deux signaux à ultrason conjugués (15, 16; 51, 52).

5. Procédure de mesure selon l'une des revendications 1 à 4, se caractérisant par le fait que le deuxième signal à ultrason (16) des deux signaux à ultrason conjugués (15, 16) est émis par rapport au premier signal (15) émis avec un certain intervalle de temps, correspondant à un certain temps de référence (Tr), avec un certain temps de décalage (Tv) qui est plus petit d'un facteur donné (a) que le temps de référence (Tr) représenté par l'intervalle de temps transmis.

6. Procédure de mesure selon l'une des revendications 1 à 5, se caractérisant par le fait

- que le moment de réception (t11) d'un signal à ultrason (15) reçu sur le lieu de réception est représenté par un flanc d'impulsion (18), qui comparé à la réception d'un signal d'oscillation électrique convertie par rapport au signal à ultrason, est généré quand une oscillation (24) de la zone de transition de fréquence (21) du groupe d'-oscillations électrique convertie (P14) dépasse pour la première fois le niveau de mesure (26),
- et que la valeur (upm) du niveau mesure (26) se situe distinctement en dessous d'un facteur préréglé de 1 (q) et est plus petit que la valeur d'amplitude (AO) des oscillations (23) dans une zone de transition de fréquence (22) du groupe d'oscillations converti (P14).

7.  Procédure de mesure selon la revendication 6, se caractérisant par le fait
    - que le signal à ultrason (15) reçu et converti en un signal à oscillation électrique (P14, P16) est comparé à un niveau de référence préréglé (30) et modifié aussi longtemps que nécessaire, jusqu'à ce que le niveau d'amplitude (A0) d'une zone de transition déterminée de fréquence (22) du signale à ultrason reçu et converti soit égal au niveau de référence (30),
    - et que le niveau de mesure (26) du signal à ultrason (15) reçu et converti fait rapport à la valeur d'amplitude (A0) des oscillations (23) dans la zone de transition de fréquence déterminée (22) du groupe d'oscillations électrique (P14).

8.  Procédure de mesure selon l'une des revendications 1 à 7, se caractérisant par le fait
    - que les deux signaux à ultrason conjugués (51, 52) sont diffusés dans différents systèmes de transmission (2, 11),
    - et que l'un des systèmes de transmission (11) est un système de référence ayant des caractéristiques de transmission définis pour une certaine distance de transmission (9).

9.  Disposition pour la réalisation de la procédure de mesure selon l'une des revendications 1 à 8,
    - avec deux parcours de transmission à ultrason, dont chacun possède à un bout un émetteur à ultrason et à l'autre, étant le lieu de réception, un transcodeur électroacoustique,

- avec un circuit de mesure en aval des transcodeurs électroacoustiques, ayant en aval de chaque transcodeur électroacoustique (5, 6) un détecteur de signaux (17),
- avec un circuit d'évaluation (40), et un circuit de gestion de commande (14) pour le pilotage de la génération des groupes d'oscillation du côté émetteur (P11, P12, P13), et l'introduction de ces groupes d'oscillation dans les deux émetteurs à ultrason pour la détermination du début de ces groupes d'oscillation comme moments étiquetés (t01, t02, t03) de ces mêmes groupes, caractérisé par le fait
- que les détecteurs de signaux (17) génèrent un flanc d'impulsion (18, 19, 20) au moment de la reconnaissance d'un groupe d'oscillations (P14, P15, P16) du signal à ultrason reçu,
- et que le circuit de mesure (34) génère un premier signal électrique de mesure limité (36), assigné par les flancs d'impulsion (18, 20) au premier transcodeur d'ultrasons (5) du détecteur de signaux (17), dont la valeur du signal (T.m1) correspond à l'intervalle de temps des deux moments détectés (t11, t13) du signal à ultrason (15) reçu avec le premier transcodeur d'ultrasons (5), où les moments détectés correspondent à deux moments étiquetés (t01, t03), assignés par le circuit de gestion de commande au signal à ultrason émis, dont l'intervalle de temps est la somme d'un certain temps de référence (Tr), et que le circuit de mesure (34) génère avec les premiers flancs d'impulsion (18, 19) des deux transcodeurs d'ultrasons (5, 6) en aval des détecteurs de signaux (17) un deuxième signal de mesure limité (37), dont la valeur du signal correspond à la valeur de mesure (T.m1) de l'intervalle des moments de réception (t11, t12) des deux signaux à ultrason conjugués reçus (15, 16).

Le circuit comprend un régulateur de rapport (38) pour la création d'un nombre proportionnel (q) à partir du quotient de la valeur de mesure (T.m2) du deuxième signal de mesure (37) par rapport à la valeur (T.m1) du premier signal de mesure électrique (36), et un multiplicateur (39) pour la multiplication du nombre proportionnel (q) à la valeur du temps de référence déterminé (Tr), qui est fournie au multiplicateur par le circuit de gestion de commande (14) ou du circuit d'évaluation (40) pour la sortie d'une valeur effective (dT1) de l'intervalle des moments de réception (t11, t12), non affectée par les perturbations pendant la transmission (3) des deux signaux à ultrasons conjugués et reçus (15, 16).

10. Disposition selon la revendication 9, caractérisée par le fait
   - que le détecteur de signaux (17) comprend dans son circuit de signal un amplificateur de signaux (27), dont l'amplification est réglable à l'entrée de réglage (31),
   - que entre la sortie de l'amplificateur et son entrée de réglage se trouve un circuit de réglage (28), qui saisit une certaine zone de t transition de fréquence prédéterminée (22) du signal à ultrason reçu (15) et qui règle l'amplification de l'amplificateur de manière à ce que les amplitudes des oscillations (23) de cette zone soient égales à un certain niveau de référence (30),
   - et que en état ajusté, un commutateur rapide de valeur (50) en aval de l'amplificateur de signaux génère un flanc d'impulsion (18), dès qu'une oscillation (24) de la zone de transition de fréquence (21) d'un groupe d'oscillations électriques (P14) transmis sur le détecteur de signaux, avec un signal à ultrason reçu (15) sur une des entrées du canal de mesure (32), dépasse un certain niveau (26).

11. Disposition de mesure selon l'une des revendications 9 ou 10 caractérisée par le fait
   - que le circuit de mesure (34) génère comme remier signal électrique une impulsion de mesure (36), dont la longueur d'impulsion correspond la valeur de mesure (T.m1) de l'intervalle des deux moments étiquetés (t11, t13) du temps de référence déterminé (Tr) d'un signal à ultrason transmis (15), et qui génère comme deuxième signal électrique une impulsion de mesure (37), dont la longueur d'impulsion correspond à la valeur de mesure (T.m2) de l'intervalle de temps des moments de réception (t11, t12) des deux signaux à ultrason conjugués (15,16),
   - et que le circuit de régulation de rapport (38) est un circuit d'intégration de largeur d'impulsions, qui est effectivement commuté seulement pendant que le circuit de mesure l'impulsion déterminé et fourniet une impulsion de mesure (36) pour l'intervalle de référence (T.m1).

Fig. 1

Fig 2

Fig 3

Fig 4

Fig. 5